# EUROPEAN PATENT SPECIFICATION

(11) **EP 2 482 700 B1**
(45) Date of publication and mention of the grant of the patent: **05.06.2013**
(21) Application number: 10757410.5
(22) Date of filing: 20.09.2010
(51) Int. Cl.: A47J 31/60

(54) **METHOD AND DEVICE FOR CLEANING A STEAM NOZZLE OF AUTOMATIC COFFEE MACHINES AND COFFEE MACHINE PROVIDED WITH SUCH A DEVICE**
VERFAHREN UND VORRICHTUNG ZUR REINIGUNG EINER DAMPFDÜSE IN AUTOMATISCHEN KAFFEEMASCHINEN UND MIT EINER SOLCHEN VORRICHTUNG AUSGESTATTETE KAFFEEMASCHINE
PROCÉDÉ ET DISPOSITIF DE NETTOYAGE DE BEC À VAPEUR DE MACHINES À CAFÉ ET MACHINE À CAFÉ ÉQUIPÉE DE CE DISPOSITIF

(30) Priority: 28.09.2009 IT PS20090011 U; 11.12.2009 IT MC20090249
(43) Date of publication of application: 08.08.2012
(73) Proprietor: Pergola Brevetti S.R.L., 61045 Pergola (PS) (IT)
(72) Inventor: CESARO, Cesare giuseppe, 61045 Pergola (IT)
(74) Representative: Baldi, Claudio
(86) International application number: PCT/EP2010/063788
(87) International publication number: WO 2011/036116

(56) References cited:
- WO-A1-01/88187
- WO-A1-2009/122038
- DE-A1-102004 063 279

## Description

The present invention relates to a method and device for cleaning a steam nozzle of automatic coffee machines, and to a coffee machine provided with such a device.

Automatic coffee machines that are used in households, bars, restaurants or public places are normally provided with at least one steam nozzle to prepare coffee or hot drinks.

In the present description with claims, the expression "automatic coffee machines" refers to a machine in which water is continuously heated in a boiler and then sent to a filter for coffee or similar products; the machine is defined as "automatic" because it is capable of providing multiple doses of coffee (or equivalent drinks) without having to be charged with water every time.

The steam is produced in a boiler of the machine and conveyed into the nozzle by means of suitable conduits.

The preparation of drinks that need to use steam often provides that the free end of the nozzle with jets is immersed into the drink to dispense steam directly into the drink and not only on its free surface.

However, this requires cleaning the nozzle at every use, in order to avoid that rests of the drink in which it has been immersed may clog the steam nozzles or, more generally, may be dispersed in the next drink.

In fact, a cloth is normally used for cleaning, although this operation does not guarantee the elimination of deposits inside the jets of the nozzle.

In order to eliminate said deposits, during the cleaning operation the user discharges some steam in the air.

The cleaning of the nozzle is therefore impaired by some drawbacks, which are mainly related to the fact that it is rather arduous, since it requires the execution of multiple operations and is potentially dangerous because of the hot steam dispensed in the air.

In any case such an operation does not guarantee excellent results: external cleaning with a cloth is not hygienically satisfactory because possible microbes or, more generally, dirt deposited in the interstices or on the external surface of the nozzle are not efficaciously eliminated and the nozzle is not sanitized satisfactorily.

A prior art device for cleaning a steam nozzle of an automatic coffee machine is described in DE 102004063279 A1.
The present invention is related to a method for cleaning a steam nozzle of automatic coffee machines.

A first object of the present invention is a device for cleaning a steam nozzle of automatic coffee machines as claimed in claim 1.

A further object of the present invention is an automatic coffee machine provided with such a cleaning device.

The method provides for using the steam generated by the steam source of the coffee machine also to clean the steam nozzle, thus guaranteeing perfect sanitization.

The device for cleaning a steam nozzle of automatic coffee machines according to the present invention is defined such as in claim 1.

In this way the method of the invention is implemented and dispensing of steam in the air is avoided.

Additional advantageous characteristics are the object of the enclosed subclaims, which are an integral part of the present description.

The invention will become clearer following to the detailed description of the enclosed drawings that illustrate an embodiment, wherein:
fig. 1 is an axonometric view of a first embodiment of the device according to the present invention;
Fig. 2 is a front view of the device of Fig. 1;
Fig. 3 is a side view of the device of Fig. 1;
Fig. 4 is a top view of the device of Fig. 1;
fig. 5 is an axonometric view of a second embodiment of the device according to the present invention;
Fig. 6 is a side view of the device of Fig. 5;
Fig. 7 is a front view of the device of Fig. 5;
Fig. 8 is a cross-sectional view of the device of Fig. 5;
Fig. 9 is a top view of the device of Fig. 5.

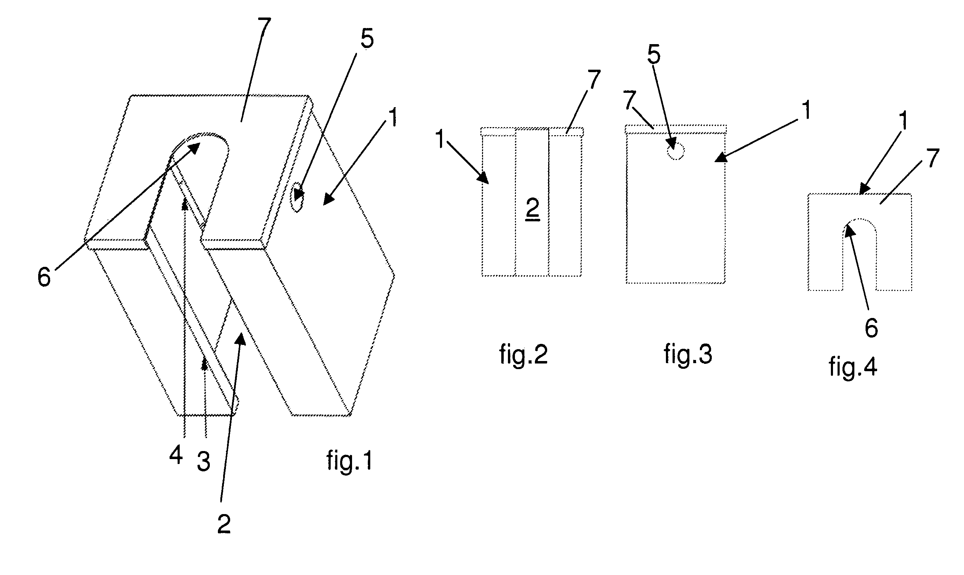

Fig. 1 shows a first embodiment of the device of the invention, seen in different views also in figures 2 to 4.

It comprises a sanitization chamber (2) adapted to house the nozzle; the sanitization chamber (2) is defined by shell walls (3) and upper wall (7) provided with a notch (6) for insertion of the steam nozzle inside said sanitization chamber (2), which is preferably devoid of the bottom wall, that is to say the wall that is faced downwards in assembled condition.

According to said embodiment, the shell walls (3) are hollow and the internal cavity communicates with a feeding hole (5) obtained on one of said walls (3).

The sanitization chamber (2) communicates with the cavity of the shell walls (3) by means of diffusion means (4), such as for example holes, preferably microholes, provided on the side of the shell walls (3) facing the sanitization chamber (2).

The feeding hole (5) is connected, for example by means of a suitable conduit (not shown), to a steam source of the coffee machine where the steam nozzle to be sanitized by means of the device (1) is mounted.

Preferably, such a steam source is the same boiler of the automatic coffee machine.

Operation is as follows: to clean and sanitize the steam nozzle, for instance after use, the nozzle is inserted into the sanitization chamber (2) and steam is dispensed inside it by means of the feeding hole (5).

The steam is dispensed at high pressure by the diffusion means (4) in the sanitization chamber (2) and thoroughly cleans the steam nozzle.

The lack of the bottom wall of the device allows for discharging condensation and dirt before they are deposited in the sanitization chamber (2).

Another advantage consists in the presence of the notch (6), together with the fact that the sanitization chamber (2) is open on one side.

Typically the steam nozzle is rotatably mounted on automatic coffee machines, in such a way to be moved from use condition to non-use condition.

The presence of the opening of the sanitization chamber (2) allows for mounting the device (1) in fixed mode on the automatic coffee machine in such a way that when the steam nozzle is in non-use position it is housed in the sanitization chamber (2) and can be simply extracted by means of rotation.

In this way cleaning and sanitization of the steam nozzle are extremely simple and do not require any complicated maneuvers; moreover, free dispensing of hot steam in the air is avoided.

Obviously, numerous modifications of the aforementioned device are possible without leaving the scope of the present invention such as defined in tha claims.

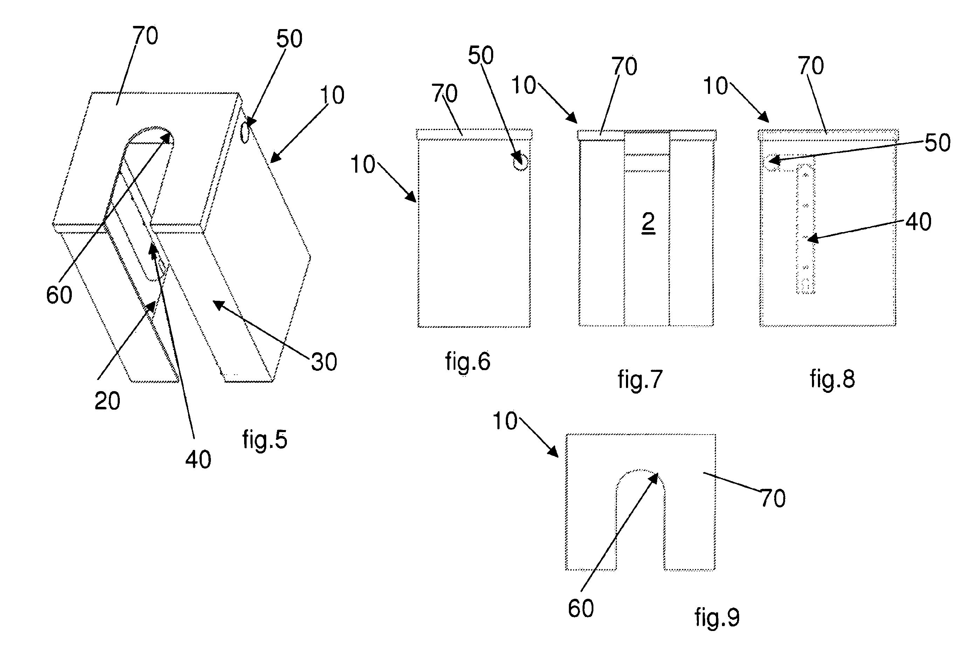

Another embodiment of the device (10) is shown, for example, in Fig. 5 and in different views in Figs. 6 to 9, wherein equivalent parts are indicated with the same referrals followed by a "0" (zero) without adding any further details.

The device (10) operates in the same way as the device (1), except for the fact that the shell walls (30) are solid.

In such a case, the steam diffusion means (40) comprise at least one perforated pipe that extends internally in the sanitization chamber (20) and communicates with the feeding hole (50); the latter communicates with a steam source of the automatic coffee machine where the nozzle to be sanitized is mounted.

Also in this case the steam dispensed through the holes of the perforated pipe sanitizes the steam nozzles, thus achieving the same advantages as the ones described above.

Moreover, it must be noted that, as it is described above, the sanitization chamber (20) is devoid of the bottom wall, thus being open downwards in assembled condition.

Also in this case the upper wall (70) is provided with a notch (60) for insertion of said steam nozzle into the sanitization chamber (20).

For the same reasons described above, the sanitization chamber (20) is open laterally, in such a way to facilitate the insertion of a rotary nozzle of the coffee machine.

In principle further embodiments are possible, which are not illustrated herein for the sake of brevity.

For instance, the sanitization chamber (2,20) can be closed laterally, being the shell walls (3,30) continuous; in such a case the steam nozzle will be inserted in the sanitization chamber (2,20) through the notch (6,60) of the upper wall (7,70).

According to another alternative embodiment the diffusion means (40) comprise a plurality of perforated or microperforated pipes that extend inside the sanitization chamber (2,20) in multiple directions, for example in spiral, coaxial circles or similar.

According to a further embodiment, the diffusion means (4,40) comprise both perforated hollow shell walls (3) and perforated or microperforated pipes.

According to a further embodiment, the steam used to clean and sanitize the nozzle is the same steam emitted by the nozzle: In such a case, a system of channels must be provided to connect the jets of the nozzle with the diffusion means (4,40).

According to a less advantageous embodiment, the sanitization chamber (2,20) is closed with a bottom wall.

## Claims

1. Device (1, 10) for cleaning a steam nozzle of an automatic coffee machine, comprising:
a sanitization chamber (2, 20) adapted to house said steam nozzle, said sanitization chamber (2, 20) being in communication with a steam source of the automatic coffee machine
**characterized in that**
**said sanitization chamber (2, 20) is at least partially defined by shell walls (3, 30) and upper wall (7, 70), said upper wall (7, 70) being provided with a notch (6, 60) for insertion of said steam nozzle.**

2. Device (1, 10) as claimed in claim **1**, **characterized in that** it comprises steam diffusing means (4, 40) adapted to diffuse steam in said sanitization chamber (2, 20).

3. Device (1, 10) as claimed claim **1 or 2**, wherein said sanitization chamber (2, 20) is not provided with bottom wall.

4. Device (1) as claimed claim **2**, wherein said shell walls (3) are empty and their internal cavity is in communication with a steam feeding hole (5) and wherein said steam diffusing means (4) comprise one of more holes provided on the internal side of the shell walls (3) facing towards the sanitization chamber (2), adapted to put said internal cavity of the shell walls (3) in communication with said sanitization chamber (2).

5. Device (10) as claimed in claim **2**, wherein said steam diffusion means (40) comprise at least one perforated pipe that extends internally in the sanitization chamber (20) and communicates with a steam feeding hole (50).

6. Automatic coffee machine comprising at least one steam source and one steam nozzle, **characterized in that** it comprises a device (1, 10) as claimed in any one of claims **1 to 5**.

7. Coffee machine as claimed in claim 6, wherein said device (1, 10) and said steam nozzle are fed by the same steam source.

## Patentansprüche

1. Vorrichtung (1,10) zur Reinigung einer Dampfdüse einer automatischen Kaffeemaschine, umfassend:
eine Hygienisierungskammer (2, 20), die dazu geeignet ist, die Dampfdüse aufzunehmen, wobei die Hygienisierungskammer (2, 20) mit einer Dampfquelle der automatischen Kaffeemaschine in Verbindung steht,
**dadurch gekennzeichnet, dass**
die Hygienisierungskammer (2, 20) mindestens teilweise durch Gehäusewände (3, 30) und eine obere Wand (7, 70) begrenzt ist, wobei die obere Wand (7, 70) mit einem Schlitz (6, 60) zum Einstecken der Dampfdüse versehen ist.

2. Vorrichtung (1,10) nach Anspruch 1, **dadurch gekennzeichnet, dass** sie Mittel zur Dampfverteilung (4, 40) umfasst, die dazu geeignet sind, den Dampf in der Hygienisierungskammer (2, 20) zu verteilen.

3. Vorrichtung (1,10) nach Anspruch 1 oder 2, wobei die Hygienisierungskammer (2, 20) keine Bodenwand aufweist.

4. Vorrichtung (1) nach Anspruch 2, wobei die Gehäusewände (3) hohl sind und ihr Hohlraum mit einer Dampfzufuhröffnung (5) in Verbindung steht und die Mittel zur Dampfverteilung (4) eine oder mehrere Öffnungen umfassen, die auf der Innenseite der zur Hygienisierungskammer (2) gerichteten Gehäusewände (3) vorgesehen und dazu geeignet sind, den inneren Hohlraum der Gehäusewände (3) mit der Hygienisierungskammer (2) in Verbindung zu setzen.

5. Vorrichtung (10) nach Anspruch 2, wobei die Mittel zur Dampfverteilung (40) mindestens ein gelochtes Rohr umfassen, das sich im Innern der Hygienisierungskammer (20) erstreckt und in Verbindung mit einer Dampfzufuhröffnung (50) steht.

6. Automatische Kaffeemaschine, umfassend mindestens eine Dampfquelle und eine Dampfdüse, **dadurch gekennzeichnet, dass** sie eine Vorrichtung (1, 10) nach einem der Ansprüche 1 bis 5 umfasst.

7. Kaffeemaschine nach Anspruch 6, wobei die Vorrichtung (1, 10) und die Dampfdüse von derselben Dampfquelle gespeist werden.

## Revendications

1. Dispositif (1,10) pour le nettoyage d'une buse d'infusion de la vapeur d'une machine à café automatique, comprenant :
une chambre de désinfection (2, 20) apte à loger ladite buse d'infusion, ladite chambre de désinfection (2, 20) étant communicante avec une source de vapeur d'eau de la machine à café automatique,
**caractérisé en ce que**
ladite chambre de désinfection (2, 20) est au moins partiellement définie par des parois du bâti (3, 30) et par une paroi supérieure (7, 70), ladite paroi supérieure (7, 70) étant dotée d'une entaille (6, 60) pour consentir l'introduction de ladite buse d'infusion de la vapeur.

2. Dispositif (1,10) selon la revendication 1, comprenant des moyens de diffusion de la vapeur d'eau (4, 40) aptes à diffuser de la vapeur d'eau dans ladite chambre de désinfection (2, 20).

3. Dispositif (1,10) selon la revendication 1 ou 2, où ladite chambre de désinfection (2, 20) est démunie de la paroi du fond.

4. Dispositif (1) selon la revendication 2, où lesdites parois du bâti (3) sont creuses et une de leurs cavités internes est en communication avec un trou d'alimentation (5) pour la vapeur et où lesdits moyens de diffusion de la vapeur d'eau (4) comprennent un ou plusieurs trous prévus sur le côté interne des parois du bâti (3), tournées vers la chambre de désinfection (2), aptes à mettre en communication ladite cavité interne des parois du bâti (3) avec ladite chambre de désinfection (2).

5. Dispositif (10) selon la revendication 2, où lesdits moyens de diffusion de la vapeur (40) comprennent au moins un tuyau perforé qui se déploie à l'intérieur de la chambre de désinfection (20) et qui est en communication avec un trou d'alimentation (50) pour la vapeur.

6. Machine à café du type automatique, comprenant au moins une source de vapeur d'eau et une buse d'infusion de la vapeur, **caractérisée en ce qu'**elle comprend un dispositif (1, 10) selon l'une quelconque des revendications de 1 à 5.

7. Machine à café selon la revendication 6, où ledit dispositif (1, 10) et ladite buse d'infusion de la vapeur sont alimentés par la même source de vapeur d'eau.
